# EUROPEAN PATENT SPECIFICATION

(11) **EP 3 505 732 B1**
(45) Date of publication and mention of the grant of the patent: **24.03.2021**
(21) Application number: 17880441.5
(22) Date of filing: 01.12.2017
(51) Int. Cl.: F01N 3/28, B01D 53/94, F01N 3/24, F01N 3/10, F01N 3/021, F01N 13/00, F02M 26/00

(54) **ENGINE EXHAUST DEVICE**
ABGASVORRICHTUNG FÜR MOTOR
DISPOSITIF D'ÉCHAPPEMENT DE MOTEUR

(30) Priority: 16.12.2016 JP 2016244420
(43) Date of publication of application: 03.07.2019
(73) Proprietor: Mazda Motor Corporation, Aki-gun, Hiroshima 730-8670 (JP)
(72) Inventor: KURAMASHI, Taku, Aki-gun Hiroshima 730-8670 (JP); KITABATAKE, Keishi, Aki-gun Hiroshima 730-8670 (JP); TAKAMURE, Tamotsu, Aki-gun Hiroshima 730-8670 (JP); KAMO, Toshiaki, Aki-gun Hiroshima 730-8670 (JP)
(74) Representative: Müller-Boré & Partner Patentanwälte PartG mbB
(86) International application number: PCT/JP2017/043257
(87) International publication number: WO 2018/110318

(56) References cited:
- EP-A1- 2 960 456
- WO-A1-02/077425
- WO-A1-2008/061610
- WO-A1-2009/016780
- WO-A1-2010/142647
- DE-A1-102014 206 907
- DE-A1-102015 107 083
- JP-A- 2007 071 035
- JP-A- 2011 117 409
- JP-A- 2011 117 409
- JP-A- 2011 241 705
- JP-A- 2012 529 592
- JP-A- 2015 059 558
- JP-A- 2016 125 475

## Description

### TECHNICAL FIELD

The present disclosure relates to an engine exhaust device.

### BACKGROUND ART

Conventionally, a plurality of catalysts for purifying exhaust gas from an automobile engine such as a diesel engine or a gasoline engine have been disposed in series in an upstream area of an exhaust passage where the temperature of the exhaust gas is high.

At that time, in order to house the plurality of catalysts within a smaller area, it has been well-known to dispose a catalyst, located in an upstream area in an exhaust gas flow direction, laterally relative to a catalyst located in a downstream area in the exhaust gas flow direction (see Patent Document 1).

Patent Document 1 discloses a technique of disposing, in a housing, first and second exhaust-gas treatment units in directions substantially perpendicular to each other such that the first and second exhaust-gas treatment units overlap by at least 50%.

### CITATION LIST

### PATENT DOCUMENT

[Patent Document 1] Japanese Unexamined Patent Publication (Japanese Translation of PCT Application) No. 2012-529592

DE 10 2015 107083 A1 discloses a converter housing which has a primary housing section for receiving a first converter bridge, an intermediate housing section and a secondary housing section for receiving a second converter bridge.

JP 2016 125475 A discloses an exhaust emission control device. An exhaust passage of the exhaust emission control device has an upstream segment where an upstream side controlling part is arranged; a downstream segment where a downstream side controlling part is arranged; and connecting segment for connecting the upstream segment with the downstream segment.

### SUMMARY OF THE INVENTION

### TECHNICAL PROBLEM

However, in the technique in Patent Document 1, when the exhaust gas that has passed through the second exhaust-gas treatment unit flows into the first exhaust-gas treatment unit, it becomes difficult to allow the exhaust gas to flow uniformly in the overlapping area and the rest area of the first exhaust-gas treatment unit. As a result, the first exhaust-gas treatment unit may be used inefficiently. In addition, due to the overlapping area, the exhaust gas may flow unevenly, and the flow rate of the exhaust gas may be increased in some area, resulting in an increase in ventilation resistance and a decrease in output of the engine.

In view of the foregoing problems, the present disclosure attempts to provide a small-sized, engine exhaust device having a plurality of catalysts, and capable of efficiently using such catalysts to improve function and performance of the catalysts and to improve mountability of a control device.

### SOLUTION TO THE PROBLEM

In order to solve the above problems, the present disclosure is directed to an engine exhaust device, having a plurality of catalysts, in which an exhaust gas outlet pipe disposed in a downstream end of the second catalyst is offset toward an overlap of a first catalyst and a second catalyst.

That is to say, an exhaust device according to a first technique of the invention is defined in claim 1.

According to the first technique, the exhaust gas that has flowed in the second catalyst flows toward the exhaust gas outlet pipe offset toward the first catalyst, thereby increasing the amount of the exhaust gas entering the overlap. This can improve efficiency for using catalysts to improve function and performance of the catalysts while reducing the size of the exhaust device.

A second technique is an embodiment of the first technique. In the second technique, the downstream end face of the second catalyst is provided with an EGR outlet, and the EGR outlet is disposed away from the exhaust gas outlet pipe

In EGR where part of the exhaust gas is recirculated in the intake side is adopted a configuration of the engine, the downstream end face of the second catalyst is provided with an EGR outlet. According to a second technique, the EGR outlet is disposed away from the exhaust gas outlet pipe, thereby dividing the flow of the exhaust gas in the second catalyst into a flow toward the exhaust gas outlet pipe and a flow toward the EGR outlet to equalize the flow. This can improve efficiency for using catalysts to improve function and performance of the catalysts.

A third technique is an embodiment of the first or second technique. In the third technique, the exhaust gas outlet pipe has a side surface closer to the first catalyst, the second catalyst has a side surface closer to the first catalyst, and the side surface of the exhaust gas outlet pipe is located closer to the first catalyst than the side surface of the second catalyst is.

The third technique can further increase the amount of the exhaust gas flowing into the overlap of the second catalyst, thereby improving efficiency for using catalysts, to improve function and performance of the catalysts and mountability of a control device.

A fourth technique is an embodiment of any one of the first to third techniques. In the fourth technique, the exhaust gas outlet pipe is disposed below a plane including the center axis of the second catalyst and parallel to the center axis of the first catalyst.

According to the fourth technique, the exhaust gas outlet pipe is disposed below the first catalyst and the second catalyst, thereby effectively collecting and removing moisture generated along with the purification of the exhaust gas by the first catalyst and the second catalyst.

A fifth technique is an embodiment of any one of the first to fourth techniques. In the fifth technique, the predetermined dihedral angle is 60° or more and 120° or less.

The fifth technique allows the exhaust gas to flow sufficiently from the first catalyst toward the second catalyst. This can improve efficiency for using catalysts to improve function and performance of the catalysts while reducing the size of the exhaust device.

### ADVANTAGES OF THE INVENTION

As can be seen from the foregoing description, the present disclosure can provide a small-sized exhaust device capable of efficiently using catalysts to improve function and performance of the catalyst and to improve mountability of a control device.

### BRIEF DESCRIPTION OF THE DRAWINGS

[FIG. 1] FIG. 1 is a schematic side view of an exhaust gas purifier according to a first embodiment when the device is attached to an engine.
[FIG. 2] FIG. 2 is a schematic plan view of FIG. 1.
[FIG. 3] FIG. 3 is a side view of the exhaust gas purifier of FIG. 1.
[FIG. 4] FIG. 4 is a plan view of a catalyst device of the exhaust gas purifier of FIG. 1.
[FIG. 5] FIG. 5 is a cross-sectional view taken along line V-V of FIG. 3.
[FIG. 6] FIG. 6 schematically shows the flow of exhaust gas in FIG. 5.
[FIG. 7] FIG. 7 is a cross-sectional view taken along line VII-VII of FIG. 3.
[FIG. 8] FIG. 8 is a cross-sectional view taken along line VIII-VIII of FIG. 3.
[FIG. 9] FIG. 9 is a cross-sectional view taken along line IX-IX of FIG. 4.
[FIG. 10] FIG. 10 shows a connection pipe into which a three-way catalyst is inserted when viewed from a second opening.
[FIG. 11] FIG. 11 schematically shows the flow of the exhaust gas in FIG. 10
[FIG. 12] FIG. 12 is a perspective view of the connection pipe when viewed from upper left front.
[FIG. 13] FIG. 13 shows a GPF downstream end when viewed from the front.
[FIG. 14] FIG. 14 is a perspective view showing a layout configuration of the exhaust gas purifier according to the first embodiment.
[FIG. 15] FIG. 15 schematically shows the flow of the exhaust gas when a curve of the connection pipe in a situation where the three-way catalyst and the GPF are disposed like in FIG. 6 has a larger second wall curvature radius.

### DESCRIPTION OF EMBODIMENTS

Embodiments of the present disclosure are described below with reference to the drawings. The following embodiments are merely exemplary ones in nature, and are not intended to limit the scope, applications, or use of the disclosure.

### (First Embodiment)

### <Engine>

An engine E to which an exhaust gas purifier 1 (an engine exhaust device) according to a first embodiment is attached is an inline-four cylinder diesel engine mounted in an automobile. The engine E is transversely placed in the front of a front-engine front-drive (FF) vehicle.

The engine to which the exhaust gas purifier 1 according to the first embodiment is attached is not limited to the inline-four cylinder diesel engine, and may be other multi-cylinder engines and a diesel engine. Also, the vehicle in which the engine with such an exhaust device can be mounted is not limited to the FF vehicle. The engine may be mounted in vehicles having various configurations such as front-engine rear-drive (FR) vehicles, midship-engine rear-drive (MR) vehicles, rear-engine rear-drive (RR) vehicles, four-wheel drive (4WD) vehicles, and motorcycles.

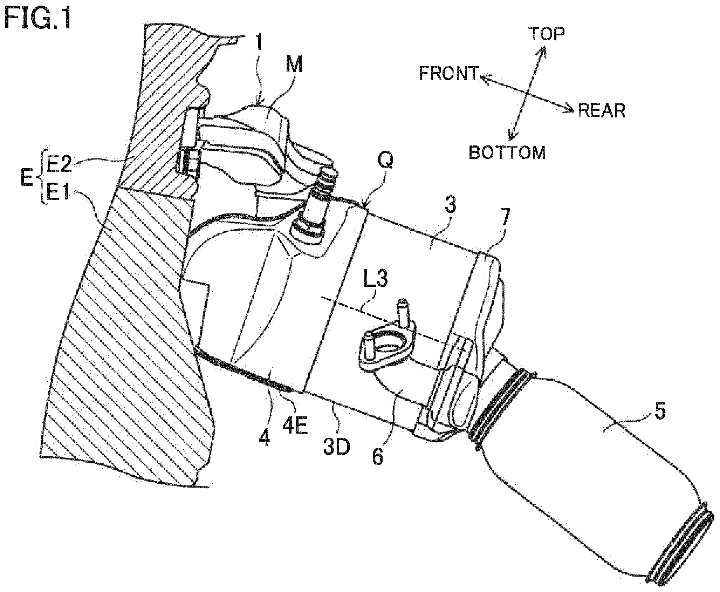

As illustrated in FIG. 1, the engine E includes a cylinder block E1 and a cylinder head E2. Although not specifically shown in the drawings, first to fourth cylinders formed of the cylinder block E1 and the cylinder head E2 are sequentially disposed in line in a direction perpendicular to the drawing plane of FIG. 1. A cylinder bore and a piston of the cylinder block E1, and the cylinder head E2 form a combustion chamber for each cylinder.

The cylinder head E2 is provided with four exhaust ports (not shown) connected to the respective four combustion chambers. The exhaust gas generated in the combustion chambers is exhausted to the outside through an exhaust passage including the exhaust ports.

### <Exhaust Passage>

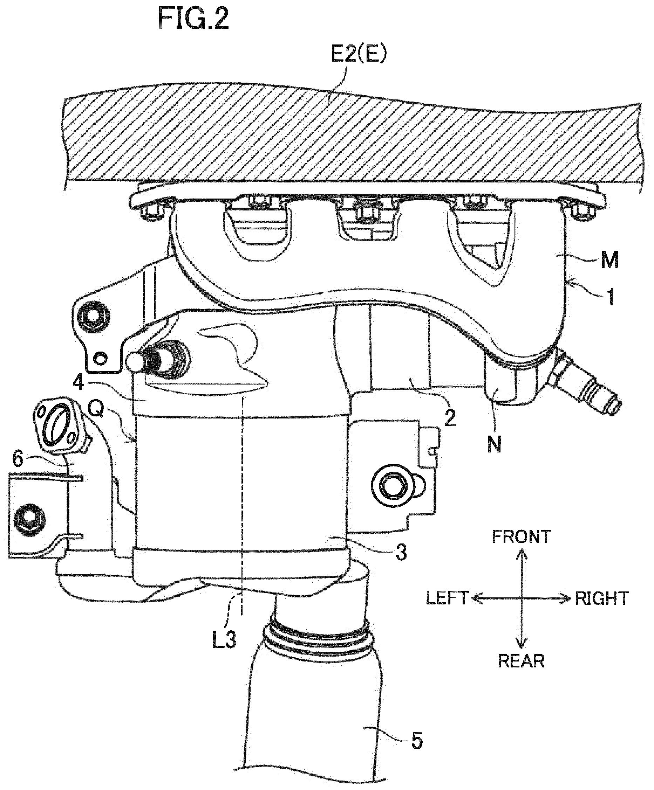

As shown in FIGS. 1 and 2, the exhaust gas purifier 1 of the embodiment is connected to the above-described exhaust ports, and is further connected to, in its downstream side, a downstream exhaust gas passage (not shown) leading to the outside of the vehicle. In this way, the exhaust passage in which the exhaust gas purifier 1 is used includes the above exhaust ports, the exhaust gas purifier 1, and the downstream exhaust gas passage.

### <Exhaust Emission Control Device>

As shown in FIGS. 1 and 2, the exhaust gas purifier 1 according to the embodiment includes an exhaust manifold M connected to the four exhaust ports of the engine E, a joint N connected to the outlet of the exhaust manifold M, and a catalyst device Q connected to the outlet of the joint N.

### <Exhaust Manifold>

As shown in FIGS. 1 and 2, the exhaust manifold M is connected to the four exhaust ports.

As shown in FIG. 2, the exhaust manifold M collects the exhaust gas exhausted from the four combustion chambers through the exhaust ports, and includes separate exhaust pipes connected to the four exhaust ports and collectively disposed on the right of the figure. The exhaust gas that has been collected in the exhaust manifold M is sent to the catalyst device Q through the joint N connected to the outlet of the exhaust manifold M.

### <Joint>

The joint N is a tubular member guiding the exhaust gas, which has been sent from the exhaust manifold M disposed above the catalyst device Q, to the catalyst device Q. In this embodiment, the joint N is an L-shaped tubular member extending downward and curved toward the left.

### <Direction>

In the description of the specification, a "vertical direction" and a "fore-and-aft direction" respectively refer to, with respect to the engine E as a reference, a direction that defines a side closer to the cylinder head E2 as an upper side and a side closer to the cylinder block E1 as a lower side, and a direction that defines a side closer to the engine E as a front side and a side closer to the exhaust manifold M as a rear side, as shown in FIG. 1. Also, as shown in FIG. 2, a "lateral direction" refers to, with respect to the engine E as a reference, the arrangement direction of the cylinders, that is to say, a direction perpendicular to the drawing plane of FIG. 2, i.e., a direction that defines the near side of the drawing in FIG. 2 as a left side and defines the far side thereof as a right side. Further, "upstream" and "downstream" are defined based on a direction of a flow of the exhaust gas exhausted from the combustion chambers through the exhaust port as a reference.

Also, as shown in FIG. 1, the "fore-and-aft direction" is parallel to a center axis L3 of a gasoline particulate filter 3 (hereinafter referred to as "GPF 3," i.e., "the GPF center axis L3 of the GPF 3") serving as a second catalyst which will be described later.

### <Catalyst Device>

As shown in FIGS. 2 to 4, the catalyst device Q includes a three-way catalyst 2, the GPF 3, a connection pipe 4, a GPF downstream end 7, an exhaust gas outlet pipe 5, and an exhaust gas recirculation (EGR) outlet 6. The three-way catalyst 2 is connected to an outlet of the joint N and serves as a first catalyst. The GPF 3 is disposed downstream of the three-way catalyst 2 and serves as a second catalyst. The connection pipe 4 connects the three-way catalyst 2 and the GPF 3 together and serves as a connection member. The GPF downstream end 7 is disposed downstream of the GPF 3. The exhaust gas outlet pipe 5 and the EGR outlet 6 are disposed downstream of the GPF downstream end 7.

### <Three-way Catalyst>

The three-way catalyst 2 is a catalyst for purifying hydrocarbon HC, carbon monoxide CO, and nitrogen oxide NOₓ in the exhaust gas. Although not specifically described, an example of the three-way catalyst 2 includes a catalyst formed by coating, on a honeycomb support, a catalyst component formed by supporting a precious metal such as Pt, Pd and Rh on a support member made of a metal oxide. The material of the three-way catalyst 2 is not particularly limited, and any generally known type may be used.

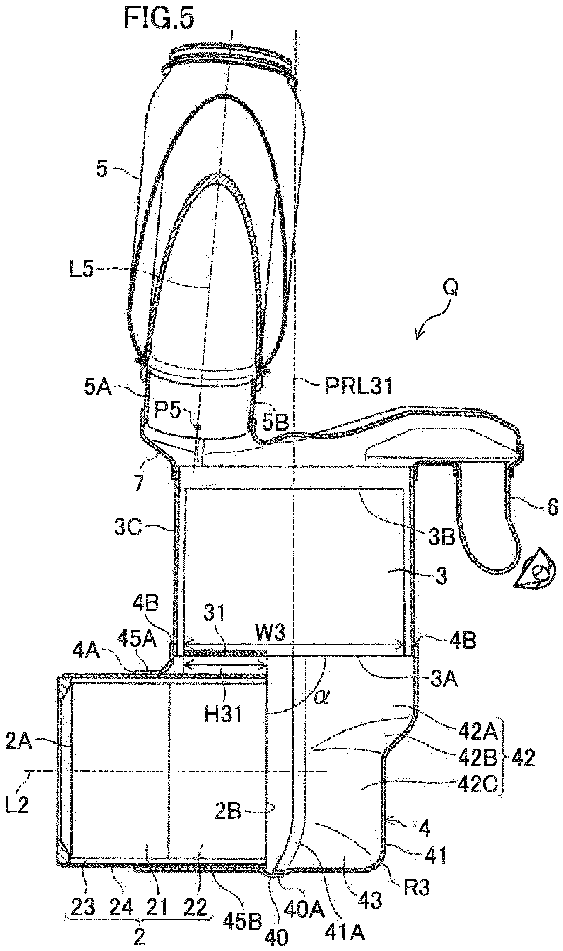

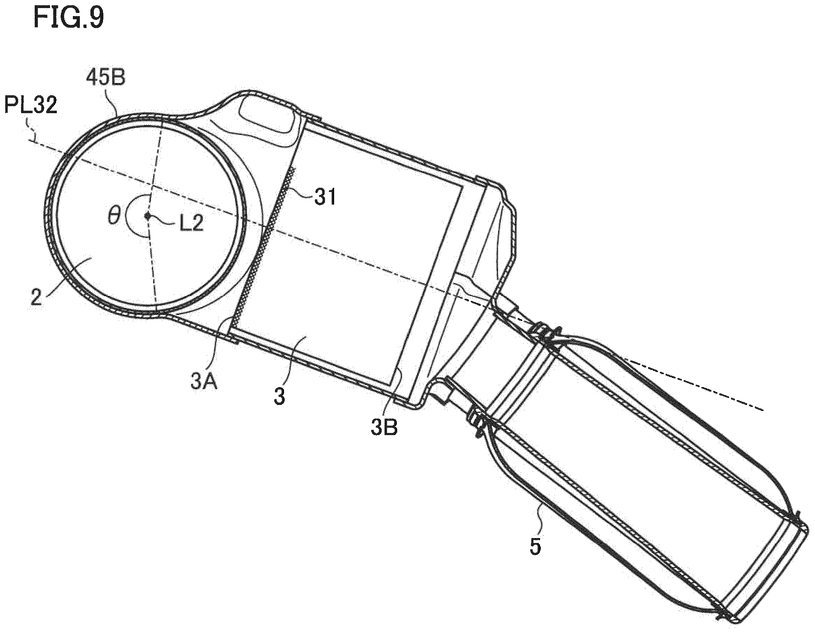

As shown in FIGS. 5 and 9, the three-way catalyst 2 is a cylindrically-shaped catalyst having a three-way catalyst center axis L2. The shape of the three-way catalyst 2 is not particularly limited, but is preferably a cylindrical member because it can be easily disposed in the exhaust passage and the exhaust gas can flow uniformly in that member. The shape of the cross section perpendicular to the three-way catalyst center axis L2 is not particularly limited, and may be any shape such as a perfect circular shape, an oval shape, a rectangular shape, and a polygonal shape. The cross section may preferably have a perfect circular shape or an oval shape in order to allow the exhaust gas to flow uniformly and reduce manufacturing cost.

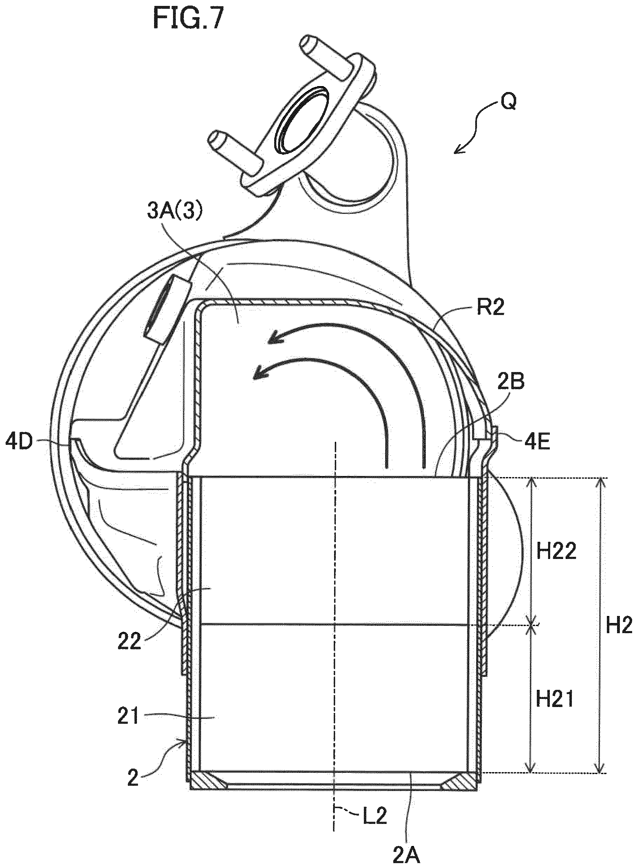

As shown in FIG. 7, the three-way catalyst 2 has an upstream end face referred to as a three-way catalyst upstream end face 2A (the upstream end face of the first catalyst), and a downstream end face referred to as a three-way catalyst downstream end face 2B (the downstream end face of the first catalyst). The three-way catalyst upstream end face 2A and the three-way catalyst downstream end face 2B have circular shapes with the same diameter.

As shown in FIGS. 5, 7, and 8, the three-way catalyst 2 has a two-stage configuration including an upstream preceding part 21, and a downstream succeeding part 22, the preceding and succeeding parts 21 and 22 serving as a catalyst body purifying the exhaust gas. The preceding part 21 is a three-way catalyst purifying low-temperature exhaust gas in a situation where the engine E is operated at a low load, and is sufficiently active at a low temperature. The succeeding part 22 is a three-way catalyst purifying high-temperature exhaust gas in a situation where the engine E is operated at a high load, and is sufficiently active at a high temperature. In the above embodiment, the three-way catalyst 2 has a two-stage configuration including the preceding part 21 and the succeeding part 22. However, this is a non-limiting example. The three-way catalyst 2 may be a catalyst having a single configuration, or a multi-stage configuration having two or more parts.

As shown in FIG. 7, supposing that the entire length of the three-way catalyst 2 in the longitudinal direction of the three-way catalyst 2, i.e., in the direction parallel to the three-way catalyst center axis L2 is H2, a ratio of a length H21 of the preceding part 21 to a length H22 of the succeeding part 22, i.e., H21/H22, is about 1. The ratio of the length H21 of the preceding part 21 to the length H22 of the succeeding part 22, i.e., H21/H22, can be changed according to, e.g., the type of the engine E. In order to give the three-way catalyst 2 an excellent catalyst ability, the ratio is preferably 0.50 or more and 2.0 or less, and more preferably 0.75 or more and 1.25 or less.

As shown in FIG. 7, an end, of the three-way catalyst 2, including the three-way catalyst upstream end face 2A, that is to say, the end of the preceding part 21 protrudes from the connection pipe 4.

The preceding part 21 is a catalyst which is suitable for purifying low-temperature exhaust gas. Thus, when exposed to high-temperature exhaust gas, the preceding part 21 is significantly thermally damaged. Allowing the preceding part 21 to protrude outward from the connection pipe 4 substantially eliminates the opportunity to expose the preceding part 21 to the high-temperature exhaust gas filling the connection pipe 4 even in the operation with a high load. This can effectively protect the preceding part 21 against deterioration due to the thermal damage, thereby reducing the risk of the thermal damage to the entire three-way catalyst 2.

The preceding part 21 may fully or partially protrude from the connection pipe 4. The protruding amount of the preceding part 21 can be adjusted according to the length H21 of the preceding part 21. In order to substantially prevent the thermal damage to the catalyst, which is sufficiently active at a low temperature, the protruding amount of the preceding part 21 is preferably 50% or more and 100% or less of the length H21 of the preceding part 21, more preferably 60% or more and 95% or less of the length H21 of the preceding part 21, and particularly preferably 70% or more and 90% or less of the length H21 of the preceding part 21.

When the succeeding part 22 that is a three-way catalyst which is sufficiently active at a high temperature is provided, the succeeding part 22 may be allowed to protrude from the connection pipe 4 or might not be allowed to protrude from the connection pipe 4. In view of the succeeding part 22 showing significant purification performance with respect to high-temperature exhaust gas, the entire succeeding part 22 is preferably inserted in the connection pipe 4 in order to reduce the size of the exhaust gas purifier 1.

As shown in FIG. 5, the three-way catalyst 2 further includes a catalyst mat 23 covering the entire outer periphery of the preceding part 21 and the succeeding part 22 which serve as the catalyst body, and a catalyst case 24 covering the entire outer periphery of the catalyst mat 23.

The temperature of exhaust gas is low, i.e., about 400°C at a low load, whereas it becomes high, i.e., about 800°C at a high load. Therefore, the three-way catalyst 2 is always exposed to high-temperature exhaust gas that has passed through the three-way catalyst 2, and thus, the three-way catalyst 2 may be deteriorated due to thermal damage.

The catalyst mat 23 stably protects the preceding part 21 and the succeeding part 22 which serve as the catalyst body even under an environment where they are exposed to the high-temperature exhaust gas, and is made of a high-heat resistant and heat-insulating material such as ceramics. The thickness of the catalyst mat 32 depends on the size of the three-way catalyst 2 and the material of the catalyst mat 23 and is not particularly limiting, but may be, e.g., 2.0 mm or more and 8.0 mm or less, preferably 3.0 mm or more and 5.0 mm or less, and more preferably 3.6 mm or more and 4.0 mm or less in order to substantially prevent thermal damage to the three-way catalyst 2. If the thickness of the catalyst mat 32 is less than 2.0 mm, the catalyst mat 32 tends to have difficulty in sufficiently having holding ability, heat-resistance ability, and heat-insulating ability. If the thickness of the catalyst mat 32 is more than 8.0 mm, the manufacturing cost may be increased and it may be difficult to provide a space for mounting a control device.

The catalyst case 24 protects the preceding part 21, the succeeding part 22 and the catalyst mat 23 in the three-way catalyst 2, and is made of metal such as iron or stainless steel. Any generally known type may be used for the catalyst mat 23 and the catalyst case 24.

### <GPF>

The GPF 3 is disposed downstream of the three-way catalyst 2, and is a filter for trapping particulate matters (hereinafter referred to as "PMs") in the exhaust gas that has passed through the three-way catalyst 2. Although not specifically described, an example of the GPF 3 includes a filter having a filtering function by providing sealing to, e.g., a honeycomb support, and coated with a catalyst to facilitate combustion of the PMs stacked on the filter. The PMs in the exhaust gas is adsorbed on the partition walls of the GPF 3. After the PMs are stacked thereon, e.g., after a main injection, a post injection is performed to increase the temperature of the GPF 3 to reach a PM combustion temperature, and then, the PMs stacked on the GPF 3 is burned off. The material of the GPF 3 is not particularly limited, but any generally known type may be used.

As shown in FIGS. 1 and 2, the GPF 3 is a cylindrically-shaped catalyst having the GPF center axis L3. The shape of the GPF 3 is, not particularly limited to, but preferably a tubular shape in order to easily dispose the GPF 3 in the exhaust passage and allow the exhaust gas to uniformly flow. The shape of the cross section perpendicular to the GPF center axis L3 is not particularly limited, and the cross section may have any shape such as a perfect circular shape, an oval shape, a rectangular shape, and a polygonal shape. The cross section may preferably have a perfect circular shape or an oval shape in order to allow the exhaust gas to flow uniformly and reduce manufacturing cost.

As shown in FIG. 9, in the GPF 3, an upstream end face is referred to as a GPF upstream end face 3A (the upstream end face of the second catalyst), and a downstream end face is referred to as a GPF downstream end face 3B (the downstream end face of the second catalyst). The GPF upstream end face 3A and the GPF downstream end face 3B have circular shapes with the same diameter.

Just like the three-way catalyst 2, the GPF 3 includes a GPF catalyst body purifying exhaust gas, a GPF catalyst mat covering the entire outer periphery of the GPF catalyst body, and a GPF catalyst case covering the entire outer periphery of the GPF catalyst mat. The GPF catalyst mat and the GPF catalyst case are the same or similar to the catalyst mat 23 and the catalyst case 24 in the purpose of use and configuration.

### <Connection Pipe>

The connection pipe 4 is a tubular member for connecting the three-way catalyst 2 and the GPF 3 together, and is a part of the exhaust passage.

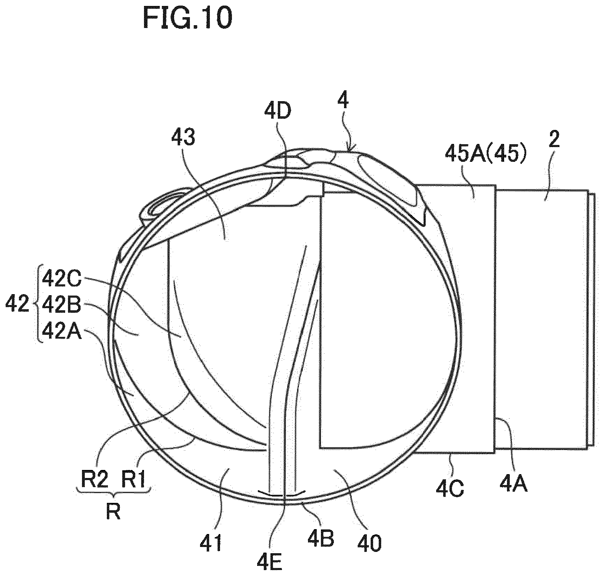

As shown in FIG. 10, the connection pipe 4 includes an upstream first opening 4A, a downstream second opening 4B, and a curve 4C connecting the first opening 4A and the second opening 4B together.

As shown in FIG. 10, the three-way catalyst 2 is inserted into the connection pipe 4 through the first opening 4A from the three-way catalyst downstream end face 2B. As shown in, e.g., FIG. 5, the GPF 3 is inserted into the connection pipe 4 through the second opening 4B from the GPF upstream end face 3A.

### -Relative Position between Three-way Catalyst and GPF-

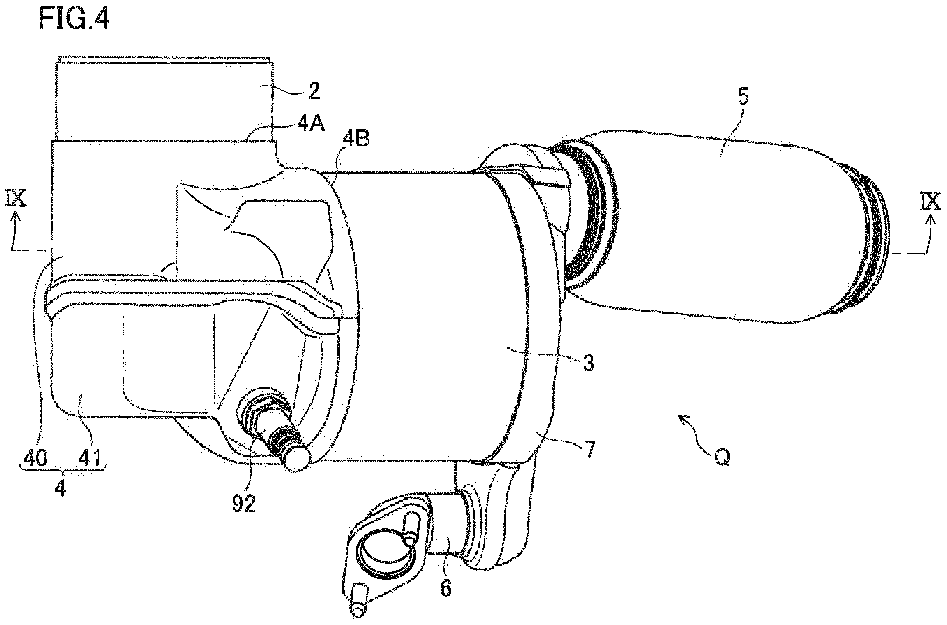

FIG. 9 is a cross-sectional view taken along line IX-IX of FIG. 4, i.e., the view of a cross section perpendicular to the three-way catalyst center axis L2 of the three-way catalyst 2 and passing through the GPF 3 and the exhaust gas outlet pipe 5 when viewed from the left side. The cross-section of FIG. 9 is hereinafter referred to as a "IX-IX cross section (vertical cross section)." The line denoted by a reference character PL32 in FIG. 9 indicates a plane including the GPF center axis L3 of the GPF 3 and parallel to the three-way catalyst center axis L2 of the three-way catalyst 2.

As shown in FIG. 9, on the IX-IX cross section, the three-way catalyst center axis L2 of the three-way catalyst 2 is disposed below the plane PL32, i.e., the GPF center axis L3 of the GPF 3. This can dispose the exhaust manifold M above the three-way catalyst 2 as will be described later, thereby making the area occupied by the exhaust gas purifier 1 compact.

As shown in FIG. 5, the three-way catalyst downstream end face 2B of the three-way catalyst 2 and the GPF upstream end face 3A of the GPF 3 are disposed so as to form a predetermined dihedral angle α of about 90° in the curve 4C. This dihedral angle α is not limited to about 90°, and is preferably 60° or more and 120° or less, more preferably 70° or more and 110° or less, and particularly preferably 80° or more and 100° or less in order to allow the exhaust gas to flow sufficiently from the three-way catalyst 2 to the GPF 3.

In addition, the GPF upstream end face 3A of the GPF 3 includes an overlap 31 covered with a part of the side surface of the three-way catalyst 2.

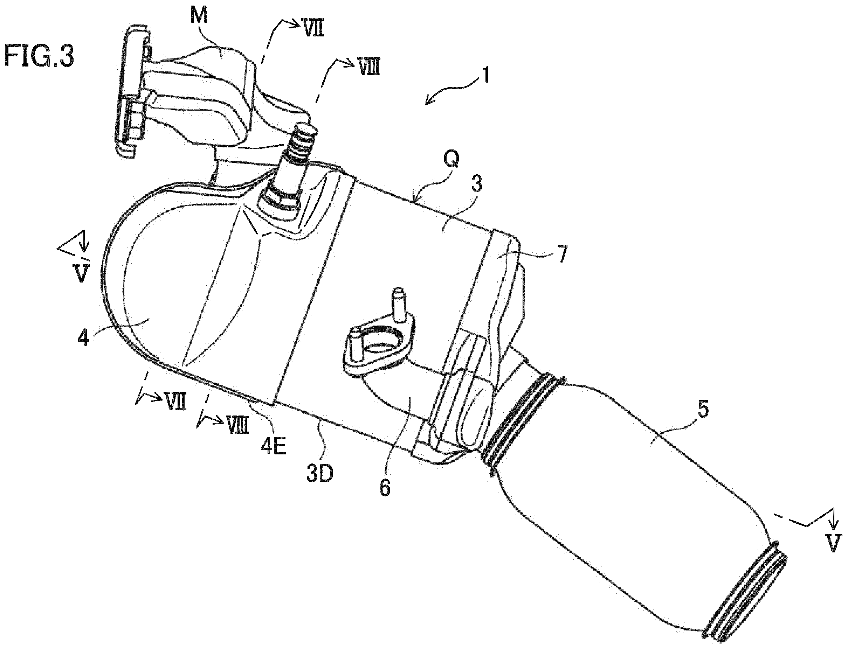

FIG. 5 is a cross-sectional view taken along line V-V of FIG. 3, i.e., the view of a cross section including the three-way catalyst center axis L2 of the three-way catalyst 2 and parallel to the GPF center axis L3 of a GPF 3 when viewed from above. The cross-section of FIG. 5 is hereinafter referred to as a "V-V cross section (cross section)." As shown in FIG. 5, on the V-V cross section, the length H31 of the part of the side surface of the three-way catalyst 2, i.e., the length H31 of the overlap 31, is preferably 10% or more and less than 50% of the entire length H2 of the three-way catalyst 2 in order to allow the exhaust gas to flow uniformly in the GPF 3 while disposing the three-way catalyst 2 and the GPF 3 within a smaller area.

On the V-V cross section of FIG. 5, the length H31 of the part of the side surface of the three-way catalyst 2 is preferably 10% or more and less than 50% of the width W3 of the GPF 3 in order to allow the exhaust gas to flow uniformly in the GPF 3 while disposing the three-way catalyst 2 and the GPF 3 within a smaller area.

In this way, when the three-way catalyst 2 and the GPF 3 are laterally disposed, the overlap 31 where the first catalyst and the GPF 3 overlap each other is formed while keeping an overlapping length less than the above range, thereby reducing the size of the exhaust gas purifier 1, and using the GPF 3, in particular, the overlap 31 more efficiently.

### -First Connection Member and Second Connection Member-

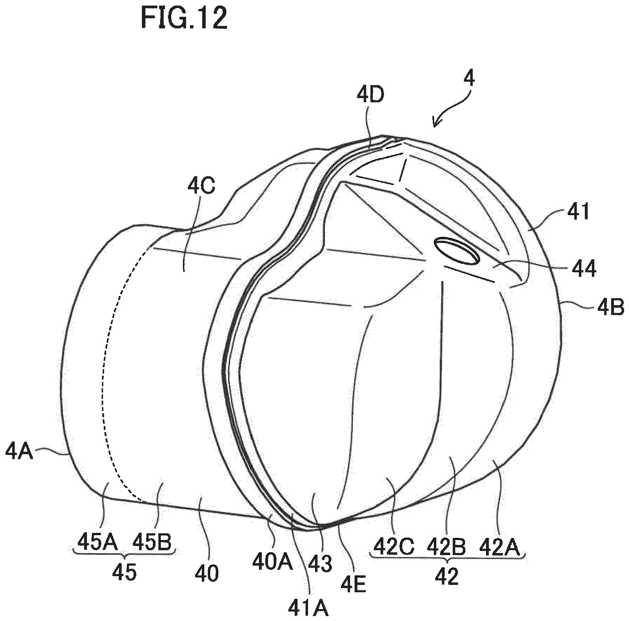

As shown in FIGS. 10 and 12, the connection pipe 4 includes a first connection member 40 and a second connection member 41.

As shown in FIG. 12, the first connection member 40 and the second connection member 41 are respectively provided with a first joining part 40A and a second joining part 41A in a portion of the connection pipe 4 near the three-way catalyst downstream end face 2B of the three-way catalyst 2. The first joining part 40A and the second joining part 41A mate with each other, thereby forming the connection pipe 4.

As shown in FIG. 10, the first connection member 40 includes the first opening 4A and a part, i.e., the right half of the second opening 4B. The second connection member 41 includes the rest, i.e., the left half of the second opening 4B.

In other words, the connection pipe 4 includes two members, namely, the first connection member 40 and the second connection member 41. The first connection member 40 includes the first opening 4A, the part of the second opening 4B, and a part of the curve 4C. The second connection member 41 includes the rest of the second opening 4B and the rest of the curve 4C.

Using the separate members, namely, the first connection member 40 and the second connection member 41 allows for precisely forming the connection pipe 4 with a complicated shape. The part, of the second opening 4B, closer to the first opening 4A is connected to the first opening 4A through the wall surface of the curve 4C having a curved shape with a small curvature radius. Therefore, stress tends to be concentrated on the wall surface of the curve 4C. The first connection member 40 and the second connection member 41 are joined together at a position expect such a position where the stress tends to be concentrated, thereby ensuring durability of the connection pipe 4.

In this specification, as shown in FIG. 10, with the exhaust gas purifier 1 including the connection pipe 4 assembled to the engine E, the uppermost and lowermost parts of the connection pipe 4 will be referred to as a ceiling 4D and a bottom 4E, respectively. In the embodiment, the ceiling 4D and the bottom 4E are located near the junction between the first connection member 40 and the second connection member 41.

### -Support-

As shown in FIGS. 10 and 12, the first connection member 40 includes a support 45 supporting the outer peripheral surface of the three-way catalyst 2.

As shown in FIGS. 5, 9, 10, 11, and 12, the support 45 includes a support 45A adjacent to the first opening (4A), and a support (a supporting surface) 45B adjacent to the three-way catalyst downstream end face (2B). The support 45A extends from the first opening 4A toward the three-way catalyst downstream end face 2B of the three-way catalyst 2, and supports the entire outer peripheral surface of the three-way catalyst 2. The support 45B extends from the support 45A, and supports a part of the outer peripheral surface of the three-way catalyst 2, the part being away from the GPF 3. In FIG. 12, the boundary between the support 45A and the support 45B is indicated by a dotted line for the sake of explanation.

As shown in FIG. 9, when the three-way catalyst 2 is viewed from the left side, i.e., the side closer to the three-way catalyst downstream end face 2B, the support 45B adjacent to the three-way catalyst downstream end face supports part of the outer peripheral surface of the three-way catalyst 2 in a range of an angle θ of about 190° around the three-way catalyst center axis L2 of the three-way catalyst 2. The angle θ is not limited to about 190°, and preferably 180° or more in order to reduce the size of the exhaust gas purifier 1, improve the ability of the connection pipe 4 holding the three-way catalyst 2, and substantially prevent the thermal damage to the three-way catalyst 2.

The outer peripheral surface of the three-way catalyst 2 is supported by the support 45B formed in the connection pipe 4 to be adjacent to the three-way catalyst downstream end face and having a sufficiently wide area. This can further sufficiently support the three-way catalyst 2, and further make the catalyst device Q compact in the fore-and-aft direction.

The support 45B adjacent to the three-way catalyst downstream end face 2B supports the three-way catalyst 2, which does not allow the exhaust gas that has passed through the three-way catalyst 2 to contact the part of the outer peripheral surface supported by the support 45B adjacent to the three-way catalyst downstream end face. This reduces the volume, of the three-way catalyst 2, exposed to the exhaust gas that has passed through the three-way catalyst 2 itself, thereby reducing thermal damage due to constant exposure to the high-temperature exhaust gas. In particular, the entire outer periphery of the three-way catalyst 2 is covered with the catalyst mat 23 and the catalyst case 24 as described above. Therefore, this can reduce thermal expansion of the catalyst case 24 and a contact pressure of the catalyst mat 23. In addition, this can substantially prevent wind erosion of the catalyst mat 23 due to the thermal damage, and shift of the protected position of the catalyst mat 23 and the catalyst case 24 of the catalyst body of the three-way catalyst 2.

Further, as shown in FIG. 1, the outer peripheral surface supported by the support 45B adjacent to the three-way catalyst downstream end face is located adjacent to the cylinder block E1 of the engine E, and thus, no exhaust gas that has passed through the three-way catalyst 2 flows toward the cylinder block E1, thereby reducing the thermal damage to the outside of the catalyst device Q.

### -First Wall and Second Wall-

As shown in FIGS. 5, 6, 10, and 12, the second connection member 41 includes a first wall 42 and a second wall 43 which guide the exhaust gas that has passed through the three-way catalyst 2 to the GPF 3. As shown in FIG. 5, the first wall 42 faces the three-way catalyst downstream end face 2B of the three-way catalyst 2, and the second wall 43 faces the GPF upstream end face 3A of the GPF 3.

The first wall 42 and the second wall 43 are formed in only the second connection member 41 when the separate members, namely, the first connection member 40 and the second connection member 41 are used to form the connection pipe 4, thereby providing a smooth wall surface to the walls guiding the exhaust gas without forming a separated position. This can reduce turbulence of the flow of the exhaust gas.

As shown in FIGS 10 and 12, the first wall 42 includes a transition wall 42A, an inclined wall 42B, and a step wall 42C. The transition wall 42A straightly extends forward from the downstream end forming the second opening 4B. The inclined wall 42B is smoothly connected to the transition wall 42A, and is formed so as to rise toward the three-way catalyst 2. The step wall 42C has a rear smoothly connected to the inclined wall 42B, and a front smoothly connected to the second wall 43 having a second wall curvature radius R3 (a predetermined curvature radius), as shown in FIG. 5.

As shown in FIG. 10, when the connection pipe 4 is viewed from the second opening 4B such that the first opening 4A is disposed in the right side, the transition wall 42A is formed so as to rise from the bottom 4E of the connection pipe 4 with a transition wall curvature radius R1. Likewise, the step wall 42C is formed so as to rise from the bottom 4E of the connection pipe 4 with a step wall curvature radius R2. As shown in FIG. 10, the transition wall curvature radius R1 and the step wall curvature radius R2 are collectively referred to as a first wall curvature radius R.

Here, the first wall curvature radius R shown in FIG. 10 is set to be larger than the second wall curvature radius R3 shown in FIG. 5.

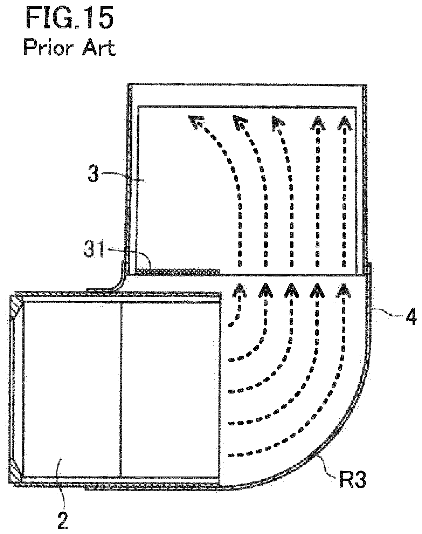

It has been well known that a fluid such as exhaust gas tends to flow along a curved surface having a large curvature radius. For example, as shown in FIG. 15, suppose that the curve 4C of the connection pipe 4 is formed in a generally-used, curved, tubular shape, i.e., in a shape with the second wall curvature radius R3 larger and more gentle than the first wall curvature radius R. In this case, as shown in the dot arrows of FIG. 15, most of the exhaust gas that has passed through the three-way catalyst 2 may flow along the gently curved wall surface with the second wall curvature radius R3, and straightly enter the GPF 3. This reduces the amount of the exhaust gas flowing in the area near the overlap 31 of the GPF 3, and thus, the GPF 3 may be used inefficiently. Also, in the area where the increasing amount of the exhaust gas flows, the exhaust gas flows quickly, and thus, ventilation resistance may be increased and power may be decreased.

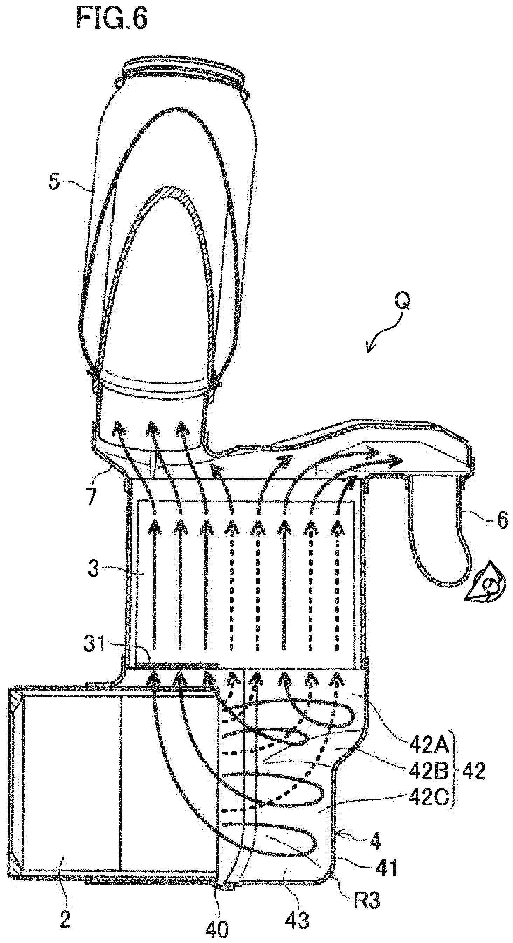

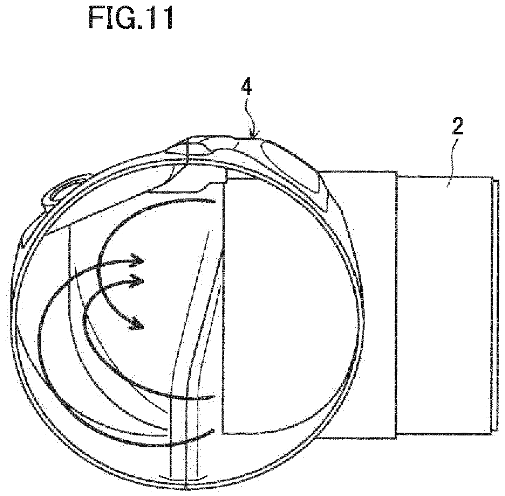

In contrast, the exhaust gas purifier 1 according to this embodiment is provided such that the first wall 42 and the second wall 43 in the curve 4C of the connection pipe 4 respectively have the second wall curvature radius R3 which is made smaller as shown in FIGS. 5 and 6, and the first wall curvature radius R which is larger than the second wall curvature radius R3 as shown in FIGS. 10 and 11.

This changes the flow of the exhaust gas, as shown in FIG. 6. That is to say, the exhaust gas that has passed through the three-way catalyst 2 has a greater tendency to flow along the wall surface of the first wall 42 than along a wall surface of a junction between the first wall 42 and the second wall 43. Specifically, as indicated by the dot arrows of FIG. 6, the flow of the exhaust gas associated with that shown in FIG. 15 is reduced. On the other hand, as shown in the solid arrows of FIG. 6, increased is the amount of the flow of the exhaust gas reaching the first wall 42, and in particular, rising up from the bottom along the wall surface curved with the transition wall curvature radius R1 of the transition wall 42A and the step wall curvature radius R2 of the step wall 42C. Using such a secondary flow of the exhaust gas reaching the first wall 42 and rising up to the space between the three-way catalyst 2 and the GPF 3 reduces the entire flow rate of the exhaust gas, thereby filling the connection pipe 4 with the exhaust gas. This can increase the amount of the exhaust gas entering the overlap 31 of the GPF 3, and reduce the ventilation resistance of the exhaust gas flowing into the GPF 3, thereby equalizing the flow of the exhaust gas, and improving utilization efficiency, function, and performance of the GPF 3.

The step wall 42C, of the first wall 42, continuous with the second wall 43 protrudes further toward the three-way catalyst 2 than the transition wall 42A does. As shown in FIG. 6, this can substantially prevent the exhaust gas, which has passed through the three-way catalyst 2 to reach the step wall 42C, from flowing locally toward the end of the GPF 3 where the transition wall 42A exists, and facilitate the flow toward the overlap 31.

Further, as shown in FIG. 10, the transition wall curvature radius R1 is set to be larger than the step wall curvature radius R2.

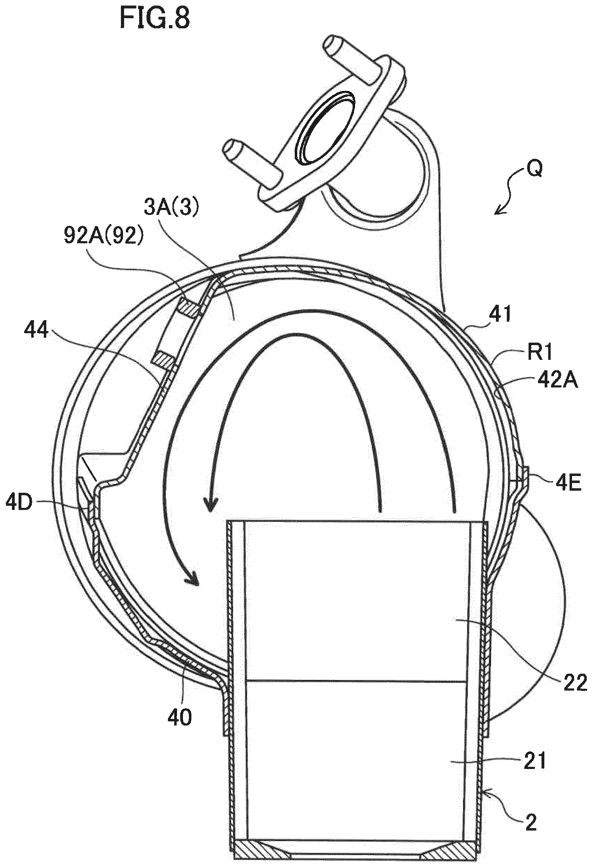

As shown in the solid arrows of FIGS. 7, 8, and 11, the exhaust gas that has reached the first wall 42, in particular, the transition wall 42A and the step wall 42C, through the three-way catalyst 2 may rise up or fall down along the curved wall surface, and then fill the curve 4C of the connection pipe 4. At that time, as shown in FIGS. 7 and 8, the transition wall 42A is curved more gently than the step wall 42C such that the transition wall curvature radius R1 is larger than the step wall curvature radius R2. This can further reduce the flow rate of the exhaust gas near the GPF upstream end face 3A of the GPF 3. This can further reduce the ventilation resistance of the exhaust gas flowing into the GPF 3 from the connection pipe 4, thereby equalizing the flow of the exhaust gas, and further improving utilization efficiency, function, and performance of the GPF 3.

Also, as shown in FIG. 8, a pedestal 44 is provided to the second connection member 41 of the connection pipe 4 at a position closer to the ceiling 4D. For example, a control device, e.g., various sensors such as an NOₓ sensor 92 (detector) shown in FIG. 4 can be disposed in this position. In FIG. 8, a sensor body of the NOₓ sensor 92 is not shown for the sake of simplicity, and only an NOₓ sensor attachment part 92A for attaching the sensor body is shown.

As stated above, the exhaust gas that has passed through the three-way catalyst 2 fills the connection pipe 4, and flows into the GPF 3. At that time, the exhaust gas that has passed through the three-way catalyst 2 is less likely to reach the area, of the connection pipe 4, closer to the ceiling 4D, and the secondary flow of the exhaust gas rising up along the wall surface of the first wall 42 allows the exhaust gas to fill the area. Therefore, the area, of the connection pipe 4, closer to the ceiling 4D is filled with the sufficient amount of the exhaust gas that is enough to detect, e.g., the component concentration, temperature and pressure of the exhaust gas with a reduced flow rate. Disposing the various sensors in the area, of the connection pipe 4, closer to the ceiling 4D, can stably detect such items with precision, thereby improving the mountability of the control devices such as various sensors.

The pedestal 44 is flat as shown in FIG. 8. However, this is merely an example, and alternatively, the pedestal 44 may be curved, for example. Also, the control devices such as various sensors may be disposed in a position except for the pedestal 44.

### <GPF Downstream End>

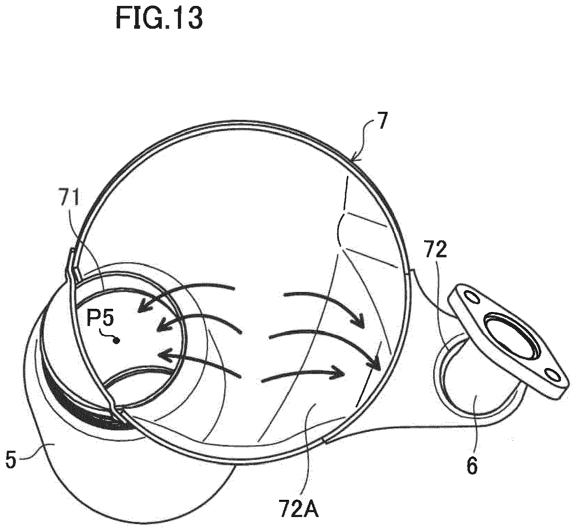

As shown in FIG. 3, the GPF downstream end 7 is connected to the downstream end of the GPF 3. This GPF downstream end 7 includes, as shown in FIG. 13, an exhaust gas outlet pipe introducing hole 71 and an EGR inlet 72. The exhaust gas outlet pipe 5, which is an outlet of the exhaust gas that has passed through the GPF 3, is attached to the exhaust gas outlet pipe introducing hole 71. The EGR outlet 6 supplying a part of the exhaust gas to the intake side is attached to the EGR inlet 72.

### <Exhaust Gas Outlet Pipe>

The exhaust gas outlet pipe 5 guides the exhaust gas that has passed through the GPF 3 to a downstream exhaust gas passage (not shown), and accumulates moisture generated along with the purification of the exhaust gas by the three-way catalyst 2 and the GPF 3 for removal.

The line denoted by the reference character PRL31 shown in FIG. 5 is a projected line of the GPF center axis L3 projected on the V-V cross section. The line denoted by the reference character L5 indicates an exhaust gas outlet pipe center axis of the exhaust gas outlet pipe 5. The point denoted by the reference character P5 is a point on the exhaust gas outlet pipe center axis L5, and indicates an intersection point, which will be described later, with a plane including the exhaust gas outlet pipe introducing hole 71. That is to say, the point P5 is the center of the exhaust gas outlet pipe introducing hole 71, and is hereinafter referred to as a central position P5 of the exhaust gas outlet pipe 5.

As shown in FIG. 5, the central position P5 of the exhaust gas outlet pipe 5 closer to the GPF downstream end face 3B of the GPF 3 is offset to the right, i.e., toward the three-way catalyst 2, with respect to the projected line PRL31 of the GPF center axis L3 of the GPF 3 projected on the V-V cross section.

This configuration, as shown in FIGS. 6 and 13, allows the exhaust gas entered the GPF 3 to flow toward the exhaust gas outlet pipe 5. This increases the amount of the exhaust gas flowing into the overlap 31 along with the flow of the exhaust gas toward the exhaust gas outlet pipe 5. This can further improve the utilization efficiency of the GPF 3.

As shown in FIG. 5, in order to allow the exhaust gas to sufficiently flow into the overlap 31 for the improved utilization efficiency of the GPF 3, it is preferable that the offset amount of the exhaust gas outlet pipe 5 can be set such that, on the V-V cross section, a right side surface 5A of the exhaust gas outlet pipe 5 closer to the three-way catalyst 2 is located on the right of the side surface 3C of the GPF 3 closer to the three-way catalyst 2, i.e., located closer to the three-way catalyst 2. At that time, in order to reduce an increase in ventilation resistance near the exhaust gas outlet pipe 5, the offset amount of the exhaust gas outlet pipe 5 is preferably set such that, on the V-V cross section, a left side surface 5B of the exhaust gas outlet pipe 5 is located on the left of the side surface 3C of the GPF 3 closer to the three-way catalyst 2.

Also, as shown in FIG. 9, the exhaust gas outlet pipe 5 is disposed below the plane PL32. As can be seen, the exhaust gas outlet pipe 5 is disposed below the GPF 3, thereby effectively accumulating, in the exhaust gas outlet pipe 5, moisture generated along with the purification of the exhaust gas by the three-way catalyst 2 and the GPF 3 for removal.

### <EGR Outlet>

EGR where part of the exhaust gas is recirculated in the intake side may be adopted as the configuration of the engine E to substantially prevent knocking and reduce the nitrogen oxide NOₓ amount. In this case, the EGR outlet 6 for the exhaust gas can be provided at a position closer to the GPF downstream end face 3B of the GPF 3.

As shown in FIG. 5, on the V-V cross section, the EGR outlet 6 is provided across the projected line PRL31 of the GPF center axis L3 of the GPF 3 from the exhaust gas outlet pipe 5. As shown in FIG. 13, the GPF downstream end 7 is provided with an exhaust gas guiding passage 72 for EGR for guiding the exhaust gas to the EGR inlet 72 at a position away from the exhaust gas outlet pipe introducing hole 71.

This configuration can provide a sufficient amount of the exhaust gas for EGR, and divide the flow of the exhaust gas in the GPF 3 into a flow toward the exhaust gas outlet pipe 5 and a flow toward the EGR outlet 6 to equalize the flow. This can further improve utilization efficiency, function, and performance of the GPF 3.

### <Disposition Inside Vehicle>

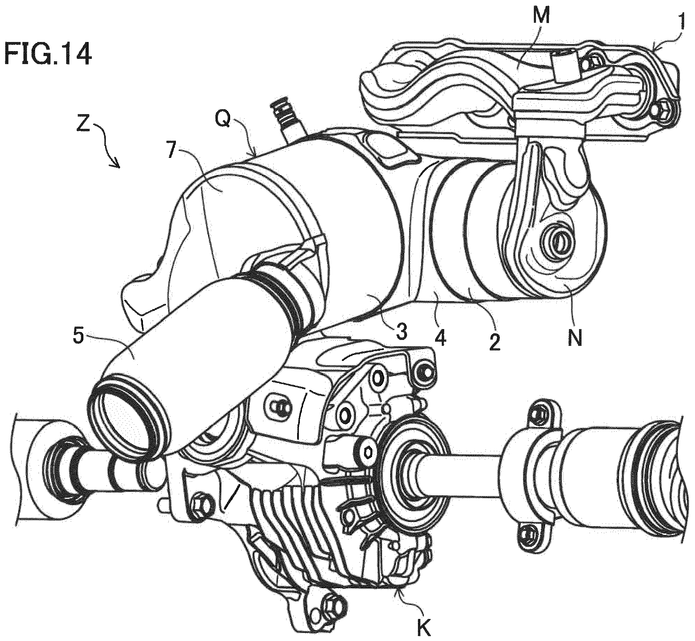

The exhaust gas purifier 1 according to this embodiment can be incorporated into, e.g., a layout configuration Z of the vehicle as shown in FIG. 14.

That is to say, as shown in FIG. 9, the three-way catalyst 2 is disposed slightly below the GPF 3. Accordingly, as shown in FIG. 14, the exhaust manifold M is disposed closely above the three-way catalyst 2, thereby further reducing the size of the exhaust gas purifier 1 in, particularly, the fore-and-aft direction.

As shown in FIGS. 1 and 3, the bottom 4E of the connection pipe 4 and the GPF bottom 3D of the GPF 3 are formed linearly. This allows, as shown in FIG. 14, a power dividing device K (a component of the vehicle) to be disposed closely below the connection pipe 4 and the GPF 3. As a result, the vehicle layout configuration can be made more compact in its fore-and-aft direction, lateral direction, and vertical direction.

The vehicle component disposed below the connection pipe 4 and the GPF 3 is not limited to the power dividing device K, and may be other vehicle components. Specifically, the closely disposed components may be, for example, a drive shaft of a driving system, or an engine mount of a mount system in a situation where the exhaust gas purifier 1 is used in, e.g., an FR vehicle.

### (Other Embodiments)

The following describes other embodiments according to the present disclosure in detail. In descriptions of these embodiments, the same parts as those of the first embodiment are denoted by the same reference characters, and detailed descriptions thereof are omitted.

The exhaust gas purifier 1 according to the first embodiment is used in an FF vehicle. The exhaust gas purifier 1 can also be used in an FR vehicle if separate exhaust pipes of the exhaust manifold M connected to the four exhaust ports are collected while being prolonged rearward, are directed toward the center in a vehicle width direction at the rear end of the engine E, and then, are prolonged rearward.

In the first embodiment, the first catalyst is implemented as the three-way catalyst 2, and the second catalyst is implemented as the GPF 3. However, the catalysts are not limited thereto, and various catalysts may be used. Specifically, for example, if the exhaust gas purifier 1 is applied to a diesel engine, a diesel particulate filter may be used. Also, a configuration in which an oxidation catalyst and an NOₓ purification catalyst are combined together may be used as the first catalyst and the second catalyst.

In the first embodiment, as shown in FIG. 9, the three-way catalyst 2 is disposed slightly below the GPF 3, and as shown in FIG. 10, the transition wall 42A and the step wall 42C of the first wall 42 are formed so as to rise up from the bottom 4E of the connection pipe 4 and respectively have the transition wall curvature radius R1 and the step wall curvature radius R2. In this regard, the three-way catalyst 2 may be disposed at substantially the same height as, or above, the GPF 3. Also, the transition wall 42A and the step wall 42C of the first wall 42 may be formed so as to rise up from the ceiling 4D of the connection pipe 4 and respectively have the transition wall curvature radius R1 and the step wall curvature radius R2. Also, the connection pipe 4 may be curved from both of the area closer to the ceiling 4D and the area closer to the bottom 4E. Instead of the curved shape, the connection pipe 4 may have a slope such as the pedestal 44. In this case, the secondary flow of the exhaust gas may be formed along the slope. In any case, an attachment position of a detector, such as a pedestal 44 for attaching a sensor thereto is not limited to the area, of the connection pipe 4, closer to the ceiling 4D, and such a detector may be attached at a position, such as an area closer to the bottom 4E and the first connection member 40, where the exhaust gas is allowed to flow uniformly.

In the first embodiment, the outlet of the exhaust manifold M is disposed on the right of the line of the cylinders, and the connection pipe 4 is disposed such that the first opening 4A is disposed on the right when viewed from the rear, as shown in FIG. 10. In this regard, according to the vehicle layout, the first opening 4A may be disposed in other directions such as the left direction and the vertical direction.

### INDUSTRIAL APPLICABILITY

The present disclosure can provide a small-sized engine exhaust device capable of efficiently using catalysts to improve function and performance of the catalysts and to improve mountability of a control device. Therefore, the present disclosure is significantly useful.

### DESCRIPTION OF REFERENCE CHARACTERS

- 1: Exhaust Emission Control Device (Engine Exhaust Device)
- 2: Three-way Catalyst (First Catalyst)
- 2A: Three-way Catalyst Upstream End Face (Upstream End Face of First Catalyst)
- 2A: Three-way Catalyst Downstream End Face (Downstream End Face of First Catalyst)
- 3: Gasoline Particulate Filter (GPF) (Second Catalyst)
- 3A: GPF Upstream End Face (Upstream End Face of Second Catalyst)
- 3B: GPF Downstream End Face (Downstream End Face of Second Catalyst)
- 3C: GPF Side Surface (Side Surface, of Second Catalyst, Closer to First Catalyst)
- 3D: GPF Bottom Portion (Second Catalyst Bottom Portion)
- 4: Connection Pipe (Connection Member)
- 4A: First Opening
- 4B: Second Opening
- 4C: Curved Portion
- 4D: Ceiling Portion
- 4E: Bottom Portion
- 5: Exhaust Gas Outlet Pipe
- 5A: Exhaust Gas Outlet Pipe Right Side Surface
- 5B: Exhaust Gas Outlet Pipe Left Side Surface
- 6: EGR Outlet
- 7: GPF Downstream End Portion
- 21: Preceding Portion
- 22: Succeeding Portion
- 23: Catalyst Mat
- 24: Catalyst Case
- 31: Overlapping Portion
- 40: First Connection Member
- 40A: First Joining Part
- 41: Second Connection Member
- 42: First Wall
- 42A: Transition Wall Portion
- 42B: Inclined Wall Portion
- 42C: Step Wall Portion
- 43: Second Wall
- 44: Pedestal
- 45: Support
- 45A: Support Adjacent to First Opening
- 45B: Support (Supporting Surface) adjacent to Three-way Catalyst Downstream End Face
- 71: Exhaust Gas Outlet Pipe Introducing Hole
- 72: EGR Inlet
- 72A: Exhaust Gas Guiding Passage for EGR
- 92: NOₓ Sensor (Detecting Means)
- 92A: NOₓ Sensor Attachment Part
- E: Engine
- K: Power Dividing device (Vehicle Component)
- L2: Three-way Catalyst Center Axis (Center Axis of First Catalyst)
- L3: GPF Center Axis (Center Axis of Second Catalyst)
- L5: Exhaust Gas Outlet Pipe Center Axis (Center Axis of Exhaust Gas Outlet Pipe)
- M: Exhaust Manifold
- N: Joint
- P5: Central Position
- PRL31: Projected Line
- PL32: Plane
- Q: Catalyst Device
- R: First Wall Curvature Radius
- R1: Transition Wall Portion Curvature Radius
- R2: Step Wall Portion Curvature Radius
- R3: Second Wall Curvature Radius (Predetermined Curvature Radius)
- α: Dihedral Angle
- θ: Angle

## Claims

1. An engine exhaust device, comprising:
a first catalyst (2) disposed in an exhaust passage of an engine (E), and purifying exhaust gas discharged from the engine (E);
a second catalyst (3) disposed downstream of the first catalyst (2) in a direction of a flow of the exhaust gas, and purifying the exhaust gas that has passed through the first catalyst (2);
a connection member (4) having a tubular shape, forming a part of the exhaust passage, and connecting the first catalyst (2) and the second catalyst (3) together; and
an exhaust gas outlet pipe (5) disposed downstream of the second catalyst (3) in the direction of the flow of the exhaust gas, and allowing the exhaust gas that has passed through the second catalyst (3) to flow toward a downstream area of the exhaust passage, wherein
the first catalyst (2) has a downstream end face (2B) and the second catalyst (3) has an upstream end face (3A), the downstream end face (2B) and the upstream end face (3A) forming a predetermined dihedral angle (α),
the upstream end face (3A) of the second catalyst (3) and a side surface of the first catalyst (2) closely face each other to form an overlap (31), and
a center axis (L5) of the exhaust gas outlet pipe (5) is offset further toward the first catalyst (2) than a center axis (L3) of the second catalyst (3) is,
wherein
the connection member (4) includes a first wall (42) and a second wall (43), the first wall (42) facing the downstream end face (2B) of the first catalyst (2), the second wall (43) facing the upstream end face (3A) of the second catalyst (3),
the first wall (42) includes a transition wall (42A), an inclined wall (42B), and a step wall (42C), the transition wall (42A) extending straightly forward from the downstream end of the connection member (4), the inclined wall (42B) being smoothly connected to the transition wall (42A) and being formed so as to rise toward the first catalyst (2), the step wall (42C) having a rear smoothly connected to the inclined wall (42B) and a front smoothly connected to the second wall (43) having a curvature radius (R3), when a cross section including the center axis (L2) of the first catalyst (2) and parallel to the center axis (L3) of the second catalyst (3) is viewed from above,
the connection member (4) includes an upstream first opening (4A), a downstream second opening (4B), and a curve (4C) connecting the first opening (4A) and the second opening (4B) together,
**characterized in that**
the transition wall (42A) is formed so as to rise from a bottom (4E) of the connection pipe (4) with a transition wall curvature radius (R1) and the step wall (42C) is formed so as to rise from the bottom (4E) of the connection pipe (4) with a step wall curvature radius (R2) when the connection member (4) is viewed from the second opening (4B) such that the first opening (4A) is disposed in the right side, and
the curvature radius (R1) and the curvature radius (R2) are larger than the curvature radius (R3).

2. The engine exhaust device of claim 1, wherein
the downstream end face (3B) of the second catalyst (3) is provided with an EGR outlet (6), and
the EGR outlet (6) is disposed away from the exhaust gas outlet pipe (5).

3. The engine exhaust device of claim 1 or 2, wherein
the exhaust gas outlet pipe (5) has a side surface (5A) closer to the first catalyst (2), the second catalyst (3) has a side surface (3C) closer to the first catalyst (2), and the side surface (5A) of the exhaust gas outlet pipe (5) is located closer to the first catalyst (2) than the side surface (3C) of the second catalyst (3) is.

4. The engine exhaust device of any one of claims 1 to 3, wherein
the exhaust gas outlet pipe (5) is disposed below a plane (PL32) including the center axis (L3) of the second catalyst (3) and parallel to the center axis (L2) of the first catalyst (2).

5. The engine exhaust device of any one of claims 1 to 4, wherein
the predetermined dihedral angle (α) is 60° or more and 120° or less.

## Patentansprüche

1. Motorabgasvorrichtung, umfassend:
einen ersten Katalysator (2), der in einem Abgastrakt eines Motors (E) angeordnet ist und von dem Motor (E) ausgestoßenes Abgas reinigt;
einen zweiten Katalysator (3), der stromabwärts des ersten Katalysators (2) in einer Richtung eines Abgasstroms angeordnet ist und das Abgas reinigt, das den ersten Katalysator (2) passiert hat;
ein Verbindungsglied (4) mit einer Rohrform, das einen Teil des Abgastrakts bildet und den ersten Katalysator (2) und den zweiten Katalysator (3) miteinander verbindet; und
ein Abgasauslassrohr (5), das stromabwärts des zweiten Katalysators (3) in der Richtung des Abgasstroms angeordnet ist und dem Abgas, das den zweiten Katalysator (3) passiert hat, erlaubt, zu einem stromabwärtigen Bereich des Abgastrakts zu strömen, wobei
der erste Katalysator (2) eine stromabwärtige Endfläche (2B) aufweist und der zweite Katalysator (3) eine stromaufwärtige Endfläche (3A) aufweist, wobei die stromabwärtige Endfläche (2B) und die stromaufwärtige Endfläche (3A) einen vorbestimmten Diederwinkel (a) bilden,
die stromaufwärtige Endfläche (3A) des zweiten Katalysators (3) und eine Seitenfläche des ersten Katalysators (2) einander eng zugewandt sind, um eine Überlappung (31) zu bilden,
eine Mittelachse (L5) des Abgasauslassrohrs (5) weiter zu dem ersten Katalysator (2) hin versetzt ist als eine Mittelachse (L3) des zweiten Katalysators (3), wobei
das Verbindungsglied (4) eine erste Wand (42) und eine zweite Wand (43) enthält, wobei die erste Wand (42) der stromabwärtigen Endfläche (2B) des ersten Katalysators (2) zugewandt ist und die zweite Wand (43) der stromaufwärtigen Endfläche (3A) des zweiten Katalysators (3) zugewandt ist,
die erste Wand (42) eine Übergangswand (42A), eine geneigte Wand (42B) und eine Stufenwand (42C) enthält, wobei sich die Übergangswand (42A) von dem stromabwärtigen Ende des Verbindungsglieds (4) gerade nach vorne erstreckt, wobei die geneigte Wand (42B) eben bzw. gleichmäßig bzw. reibungslos mit der Übergangswand (42A) verbunden ist und so ausgebildet ist, dass sie zu dem ersten Katalysator (2) hin ansteigt, wobei die Stufenwand (42C) eine Rückseite, die eben bzw. gleichmäßig bzw. reibungslos mit der geneigten Wand (42B) verbunden ist, und eine Vorderseite aufweist, die eben bzw. gleichmäßig bzw. reibungslos mit der zweiten Wand (43) mit einem Krümmungsradius (R3) verbunden ist, und zwar wenn ein Querschnitt einschließlich der Mittelachse (L2) des ersten Katalysators (2) und parallel zu der Mittelachse (L3) des zweiten Katalysators (3) von oben betrachtet wird,
das Verbindungsglied (4) eine stromaufwärtige erste Öffnung (4A), eine stromabwärtige zweite Öffnung (4B), und eine Kurve bzw. Krümmung (4C) enthält, welche die erste Öffnung (4A) und die zweite Öffnung (4B) miteinander verbindet,
**dadurch gekennzeichnet, dass**
die Übergangswand (42A) so gebildet ist, dass sie von einem Boden bzw. einer Unterseite (4E) des Verbindungsrohrs (4) mit einem Übergangswandkrümmungsradius (R1) ansteigt und die Stufenwand (42C) so gebildet ist, dass sie von der Unterseite (4E) des Verbindungsrohrs (4) mit einem Übergangswandkrümmungsradius (R2) ansteigt, wenn das Verbindungsglied (4) von der zweiten Öffnung (4B) aus so betrachtet wird, dass die erste Öffnung (4A) in der rechten Seite angeordnet ist, und
der Krümmungsradius (R1) und der Krümmungsradius (R2) größer sind als der Krümmungsradius (R3).

2. Motorabgasvorrichtung nach Anspruch 1, wobei
die stromabwärtige Endfläche (3B) des zweiten Katalysators (3) mit einem AGR-Auslass (6) versehen ist, und
der AGR-Auslass (6) von dem Abgasauslassrohr (5) weg angeordnet ist.

3. Motorabgasvorrichtung nach Anspruch 1 oder 2, wobei
das Abgasauslassrohr (5) eine Seitenfläche (5A) aufweist, die näher an dem ersten Katalysator (2) ist, der zweite Katalysator (3) eine Seitenfläche (3C) aufweist, die näher an dem ersten Katalysator (2) ist, und sich die Seitenfläche (5A) des Abgasauslassrohrs (5) näher an dem ersten Katalysator (2) als der bzw. die Seitenfläche (3C) des zweiten Katalysators (3) befindet.

4. Motorabgasvorrichtung nach einem der Ansprüche 1 bis 3, wobei
das Abgasauslassrohr (5) unterhalb einer Ebene (PL32) einschließlich der Mittelachse (L3) des zweiten Katalysators (3) und parallel zu der Mittelachse (L2) des ersten Katalysators (2) angeordnet ist.

5. Motorabgasvorrichtung nach einem der Ansprüche 1 bis 4, wobei
der vorbestimmte Diederwinkel (α) 60° oder mehr und 120° oder weniger beträgt.

## Revendications

1. Dispositif d'échappement de moteur comprenant :
un premier catalyseur (2) disposé dans un passage d'échappement d'un moteur (E) et purifiant du gaz d'échappement rejeté du moteur (E) ;
un second catalyseur (3) disposé en aval du premier catalyseur (2) dans une direction d'un écoulement du gaz d'échappement et purifiant le gaz d'échappement qui est passé à travers le premier catalyseur (2) ;
un élément de connexion (4) ayant une forme tubulaire, formant une partie du passage d'échappement et connectant le premier catalyseur (2) et le second catalyseur (3) ensemble ; et
un tuyau de sortie de gaz d'échappement (5) disposé en aval du second catalyseur (3) dans la direction de l'écoulement du gaz d'échappement et permettant au gaz d'échappement qui est passé à travers le second catalyseur (3) de s'écouler vers une zone aval du passage d'échappement, dans lequel
le premier catalyseur (2) a une face d'extrémité aval (2B) et le second catalyseur (3) a une face d'extrémité amont (3A), la face d'extrémité aval (2B) et la face d'extrémité amont (3A) formant un angle dièdre prédéterminé (a),
la face d'extrémité amont (3A) du second catalyseur (3) et une surface latérale du premier catalyseur (2) sont tournées étroitement l'une vers l'autre pour former un chevauchement (31), et
un axe central (L5) du tuyau de sortie de gaz d'échappement (5) est davantage décalé vers le premier catalyseur (2) qu'un axe central (L3) du second catalyseur (3) ne l'est,
dans lequel
l'élément de connexion (4) inclut une première paroi (42) et une seconde paroi (43), la première paroi (42) étant tournée vers la face d'extrémité aval (2B) du premier catalyseur (2), la seconde paroi (43) étant tournée vers la face d'extrémité amont (3A) du second catalyseur (3),
la première paroi (42) inclut une paroi de transition (42A), une paroi inclinée (42B) et une paroi échelonnée (42C), la paroi de transition (42A) s'étendant vers l'avant en ligne droite depuis l'extrémité aval de l'élément de connexion (4), la paroi inclinée (42B) étant connectée de manière lisse à la paroi de transition (42A) et étant formée de manière à s'élever vers le premier catalyseur (2), la paroi échelonnée (42C) ayant une partie arrière connectée de manière lisse à la paroi inclinée (42B) et une partie avant connectée de manière lisse à la seconde paroi (43) ayant un rayon de courbure (R3), lorsqu'une section transversale incluant l'axe central (L2) du premier catalyseur (2) et parallèle à l'axe central (L3) du second catalyseur (3) est visualisée du dessus,
l'élément de connexion (4) inclut une première ouverture amont (4A), une seconde ouverture aval (4B), et une courbe (4C) connectant la première ouverture (4A) et la seconde ouverture (4B) ensemble,
**caractérisé en ce que**
la paroi de transition (42A) est formée de manière à s'élever depuis un fond (4E) du tuyau de connexion (4) avec un rayon de courbure de paroi de transition (R1) et la paroi échelonnée (42C) est formée de manière à s'élever depuis le fond (4E) du tuyau de connexion (4) avec un rayon de courbure de paroi échelonnée (R2) lorsque l'élément de connexion (4) est visualisé depuis la seconde ouverture (4B) de sorte que la première ouverture (4A) est disposée dans le côté droit, et
le rayon de courbure (R1) et le rayon de courbure (R2) sont supérieurs au rayon de courbure (R3).

2. Dispositif d'échappement de moteur selon la revendication 1, dans lequel
la face d'extrémité aval (3B) du second catalyseur (3) est pourvue d'une sortie RGE (6), et
la sortie RGE (6) est disposée à l'écart du tuyau de sortie de gaz d'échappement (5).

3. Dispositif d'échappement de moteur selon la revendication 1 ou 2, dans lequel
le tuyau de sortie de gaz d'échappement (5) a une surface latérale (5A) plus proche du premier catalyseur (2), le second catalyseur (3) a une surface latérale (3C) plus proche du premier catalyseur (2), et la surface latérale (5A) du tuyau de sortie de gaz d'échappement (5) est située plus près du premier catalyseur (2) que la surface latérale (3C) du second catalyseur (3) ne l'est.

4. Dispositif d'échappement de moteur selon l'une quelconque des revendications 1 à 3, dans lequel
le tuyau de sortie de gaz d'échappement (5) est disposé en dessous d'un plan (PL32) incluant l'axe central (L3) du second catalyseur (3) et parallèle à l'axe central (L2) du premier catalyseur (2).

5. Dispositif d'échappement de moteur selon l'une quelconque des revendications 1 à 4, dans lequel
l'angle dièdre prédéterminé (a) est de 60° ou plus et 120° ou moins.
